# EUROPÄISCHE PATENTSCHRIFT

(11) **EP 1 586 782 B1**
(45) Veröffentlichungstag und Bekanntmachung des Hinweises auf die Patenterteilung: **25.07.2007**
(21) Anmeldenummer: 04009079.7
(22) Anmeldetag: 16.04.2004
(51) Int. Cl.: F16D 3/12, F16D 3/66

(54) **Überlastschutzeinrichtung**
Overload protection device
Dispositif de protection contre une surcharge

(43) Veröffentlichungstag der Anmeldung: 19.10.2005
(73) Patentinhaber: Spintzyk, Eugen, 74592 Kirchberg/Jagst (DE)
(72) Erfinder: Spintzyk, Eugen, 74592 Kirchberg/Jagst (DE)
(74) Vertreter: Götz, Georg Alois

(56) Entgegenhaltungen:
- FR-A- 609 501
- US-A- 3 988 891
- US-A- 4 355 989

## Beschreibung

Verfahren zum Überlastschutz in Antrieben und Arbeitsmaschinen die die Eigenschaft besitzen, aus dem Dauerbetrieb heraus zu blockieren oder Drehmomentspitzen verursachen, wie z.B.: Schredder, Mühlen, Kettenkratzerförderer, Brecher, Hacker, Hexler, Schaufelradbagger, Anfahrvorgänge mit Hilfe der Schleifringläufer-Motoren usw...

Die Erfindung betrifft ein Verfahren zum Überlastschutz in einer Antriebseinheit für Arbeitsmaschinen, die die Eigenschaft besitzen, aus dem Dauerbetrieb heraus zu blockieren und/oder während des Betriebes Drehmomentspitzen (Lastspitzen) ausgesetzt sind, im einzelnen mit den Merkmalen des Oberbegriffes aus Anspruch 1.

Es ist bekannt, dass in Arbeitsmaschinen, die die Eigenschaft besitzen aus dem Dauerbetrieb heraus zu blockieren, bei einer Blockierung die in den rotierenden Massen gespeicherte kinetische Energie die Antriebselemente belastet (Eᵣₒₜ = ½* Jd * ω²). Vor allem kurze Blockierzeiten können schlagartig große Energiespitzen freisetzen, die die Maschinenelemente stark beanspruchen. Ähnliches gilt für Arbeitsmaschinen, die nicht blockieren, die aber während ihres Betriebes Lastspitzen ausgesetzt sind. Bekannte Blockierschutzeinrichtungen und Drehmomentbegrenzer arbeiten nach dem Prinzip einer Raster-, Reib- oder Viskoskupplung. Beim erreichen eines bestimmten Drehmoments rutschen sie einfach durch oder werden von einem elektrohydraulischen Regelmechanismus aktiv ausgekoppelt. Nachteile solcher Lösungen: Unsauberes Ansprechverhalten der Reibkupplungen bedingt durch Unterschiede zwischen der Haft- und der Gleitreibung, Verschleiß, begrenzte thermische Kapazität, um selbst nicht zerstört zu werden müssen die Rutschmomente und Rastermomente oberhalb des Motorkippmoments liegen (hohe Belastung der Maschinenelemente). Bei den elektrohydraulisch geregelten Systemen: Komplexität, Reaktionszeiten (Totzeiten) und Anfälligkeit bedingt durch hohen Sensorik-Aufwand.

Die Druckschrift US 3,988,891 offenbart einen Stellantrieb mit einem Antriebsmotor, bei dem über eine Klauenkupplung eine Abgasklappe angesteuert wird. Die Klauenkupplung weist zwei zusammenwirkende Kupplungshälften auf, die über ein Dämpfungsmittel miteinander gekoppelt sind. Die Dämpfungsmittel sind als Feder ausgebildet, die endseitig auf der einen Kupplungshälfte abgestützt ist. Die andere Kupplungshälfte greift über eine Klaue mittig in die Feder ein.

Die Druckschrift FR 609.501 offenbart eine Kupplung mit einem Primärteil und einem Sekundärteil, wobei Primärteil und Sekundärteil über mehrere Federn gekoppelt sind, so dass in beide Verdrehrichtungen symmetrisch Energie von Übertragungsstößen aufgenommen werden können.

Die Druckschrift US 4,355,989, die den nächstkommenden Stand der Technik bildet, zeigt eine Kraftübertragungseinrichtung für eine landwirtschaftliche Schneidmaschine, die der Arbeitshauptbewegung der Schneidmaschine eine oszillatorische Bewegung in Form von Schwingungen überlagert. Bei der Kraftübertragungseinrichtung ist als Sekundärteil eine Nabe mit Speichen vorgesehen, die über Federn mit einem Primärteil gekoppelt ist, das als ein zur Nabe konzentrisch angeordneter Außenring ausgebildet ist. Die Amplituden der Schwingungen sollen an der Peripherie der Schneidtrommel der Schneidmaschine Werte zwischen 3 und 3,5 mm einnehmen.

Der Erfindung liegt die Aufgabe zugrunde, die Blockierschutzfunktion zu verbessern.

Die erfindungsfreudige Lösung der Aufgabe ist durch die kennzeichnenden Merkmale des Anspruchs 1, die vorrichtungsmäßige Umsetzung ist durch die Merkmale des Anspruchs 2 charakterisiert.

Erfindungsgemäß wird der langsamlaufenden Seite eines Untersetzungsgetriebes eine Überlastschutzeinrichtung zugeordnet, die aus einem Primärteil (2) und einem Sekundärteil (3) besteht. Beide Teile sind miteinander mit Hilfe einer Feder (1) gekoppelt. Es kann sowohl eine Zug- wie auch eine Druckfeder sein.

Die Primärseite der Überlastschutzeinrichtung wird starr mit der Getriebe-Abtriebswelle verbunden, z.B. mit Hilfe einer Wellen-Naben-Verbindung (5), die Sekundärseite wird mit der Arbeitsmaschine direkt gekoppelt z. B. mit Hilfe einer Welle (4).
Überträgt der Antrieb Drehmoment, so drückt oder zieht die Primärseite gegen die Federkraft und diese wiederum gegen die Sekundarseite. Das zu begrenzende Drehmoment M = F_{Federkennlinie} x R_{Radius}

Die Federkennlinie ist so abzustimmen, dass im Falle einer Blockierung oberhalb eines Grenz-Drehmoments die Feder einen bestimmten Verdrehwinkel φ macht. Berechnungen zeigen, dass auf der langsam laufenden Getriebeseite angebracht, recht kleine Verdrehwinkel ausreichen um große dynamische Kräfte zu absorbieren.

Vorteile dieser Erfindung:
1. Sauberes Ansprechverhalten durch die Federkennlinie
2. Kaum Verschleiß.
3. Einfach und überschaubar
4. Robust
5. Federkennlinie kann das Drehmoment auch unterhalb des Motorkippmoments begrenzen
6. Keine thermischen Probleme

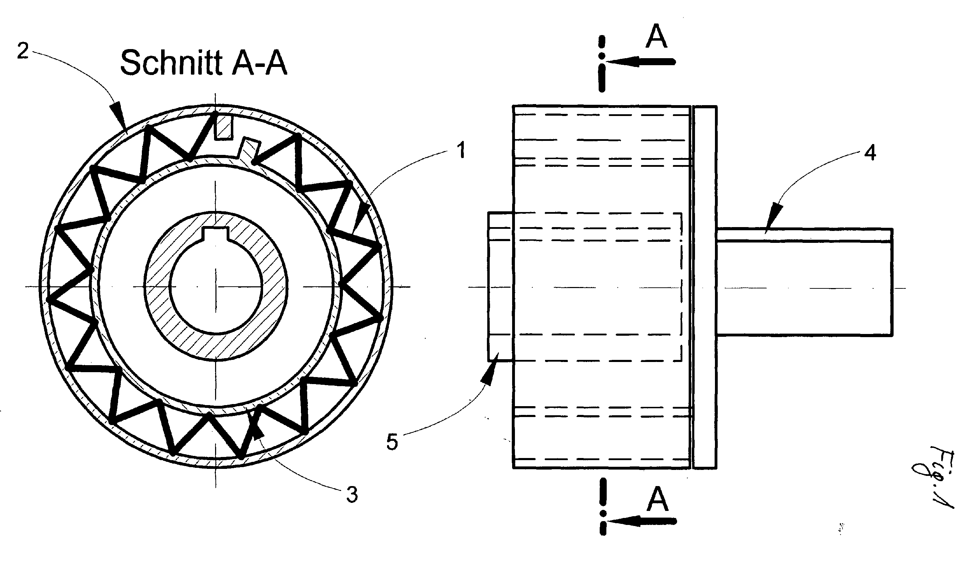

## Patentansprüche

1. Überlastschutz-Verfahren für Maschinen die aus dem Dauerbetrieb heraus blockieren können oder während des Betriebes Lastspitzen ausgesetzt sind, insbesondere Schredder, Mühlen, Kettenkratzerförderer, Hacker, Hexler, Brecher, Schaufelradbagger, Anfahrvorgänge mit Hilfe der Schleifringläufer-Motoren usw...
- mit wenigstens einer Antriebsmaschine;
- mit wenigstens einem Untersetzungsgetriebe;
- mit wenigsten einer Überlastschutzeinrichtung mit einem Primärteil (2) auf der Primärseite der Überlastschutzeinrichtung und einem Sekundärteil (3) auf der Sekundärseite der Überlastschutzeinrichtung, wobei beide Teile miteinander mit Hilfe einer Feder (1) gekoppelt sind, so dass bei Blockierung oberhalb eines Grenz-Drehmoments beide Teile gegeneinander um einen Verdrehwinkel φ um eine Verdrehachse verdrehbar sind;
1.1 bei dem die Primärseite der Überlastschutzeinrichtung mit der langsamlaufenden Getriebeseite, und die Sekundärseite der Überlastschutzeinrichtung mit der Arbeitsmaschine direkt gekoppelt sind;
1.2 bei welchem die Überlastschutzfunktion mit Hilfe einer Federkennlinie der Feder (1) verwirklicht wird:
- Das zu begrenzende Drehmoment M = F_{Federkennlinie} x Radius;
- Der Verdrehwinkel φ um die Verdrehachse dem Antrieb die notwendige Elastizität verleiht;
**dadurch gekennzeichnet, dass** zwischen Primärteil (2) und Sekundärteil (3) der Überlastschutzeinrichtung ein zu der Verdrehachse konzentrischer Ringspalt ausgebildet ist und dass sich die Feder (1) innerhalb des Ringspalts zwischen einem Vorsprung des Primärteils (2) und einem Vorsprung des Sekundärteils (3) über fast den gesanten Unfang des Ringspalts erstreckt.

2. Antriebseinheit
2.1 mit wenigstens einer Antriebsmaschine;
2.2 mit wenigstens einem Untersetzungsgetriebe;
2.3 mit wenigstens einer Überlastschutzeinrichtung, umfassend ein Primärsowie ein Sekundärteil (2,3), welche mit Hilfe einer Feder (1) miteinander gekoppelt sind und bei Blockierung oberhalb eines Grenz-Drehmoments gegeneinander um einen Verdrehwinkel φ um eine Verdrehachse verdrehbar sind;
2.4 die Antriebsmaschine mit der schnelllaufenden Getriebeseite gekoppelt ist;
2.5 die Überlastschutzeinrichtung die wenigstens mittelbar mit einer Antriebswelle der Arbeitsmaschine koppelbar ist.
**dadurch gekennzeichnet, dass** zwischen Primärteil (2) und Sekundärteil (3) der Überlastschutzeinrichtung ein zu der Verdrehachse konzentrischer Ringspalt ausgebildet ist und dass sich die Feder (1) innerhalb des Ringspalts zwischen einem Vorsprung des Primärteils (2) und einem Vorsprung des Sekundärteils (3) über fast den gesanten Unfang des Ringspalts erstreckt.

## Claims

1. Overload protection method for machines which can lock due to long-term operation or are exposed to load peaks during operation, in particular shredders, mills, chain conveyors, choppers, chaff-cutters, crushers, bucket wheel excavators, starting processes by means of slip-ring rotor motors etc., having at least one drive machine; at least one reducing gear; at least one overload protection device comprising a primary part (2) on the primary side of the overload protection device and a secondary part (3) on the secondary side of the overload protection device, both parts being coupled together by means of a spring (1), so that in the case of locking above a limit torque, both parts are rotatable about an axis of rotation by an angle of rotation φ;
1.1 Wherein the primary side of the overload protection device is directly coupled to the slowly-running gearbox side, and the secondary side of the overload protection device is directly coupled to the operating machine;
1.2 Wherein the overload protection function is carried out by means of a spring characteristic curve of the spring (1): the torque to be limited being M=F_{spring characteristic curve} x radius; and the angle of rotation φ about the axis of rotation giving the drive the necessary elasticity;
**characterised in that** between the primary part (2) and secondary part (3) of the overload protection device an annular gap is formed which is concentric with the axis of rotation and **in that** the spring (1) extends within the annular gap between a projection of the primary part (2) and a projection of the secondary part (3) over almost the complete circumference of the annular gap.

2. Drive unit
2.1 having at least one drive machine;
2.2 having at least one reducing gear;
2.3 and having at least one overload protection device, comprising a primary part and a secondary part (2, 3), which are coupled together by means of a spring (1) and upon locking above a limit torque are rotatable relative to one another by an angle of rotation φ about an axis of rotation;
2.4 the drive machine being coupled to the fast-running gearbox side;
2.5 the overload protection device being capable of being coupled at least indirectly to a drive shaft of the operating machine;
**characterised in that** between the primary part (2) and secondary part (3) of the overload protection device an annular gap is formed which is concentric with the axis of rotation and **in that** the spring (1) extends within the annular gap between a projection of the primary part (2) and a projection of the secondary part (3) over almost the entire circumference of the annular gap.

## Revendications

1. Procédé de protection contre les surcharges pour des machines qui peuvent bloquer à partir du régime établi ou sont exposées à des pointes de charge pendant le fonctionnement, en particulier des déchiqueteuses, broyeurs, convoyeurs à chaînes à raclettes, piocheuses, hacheurs, concasseurs, excavateurs rotatifs à roue-pelle, processus de démarrage à l'aide des moteurs à rotors bobinés, etc ...
- avec au moins une machine d'entraînement;
- avec au moins un démultiplicateur;
- avec au moins un dispositif de protection contre les surcharges avec une partie primaire (2) du côté primaire du dispositif de protection contre les surcharges et une partie secondaire (3) du côté secondaire du dispositif de protection contre les surcharges, les deux parties étant couplées l'une à l'autre au moyen d'un ressort (1), de sorte qu'en cas de blocage au-dessus d'un couple limite, les deux parties soient aptes à tourner l'une par rapport à l'autre d'un angle de rotation φ autour d'un axe de rotation;
1.1 dans lequel le côté primaire du dispositif de protection contre les surcharges est directement couplé au côté réducteur à vitesse lente, et le côté secondaire du dispositif de protection contre les surcharges est directement couplé à la machine de travail ;
1.2 dans lequel la fonction de protection contre les surcharges est réalisée à l'aide d'une courbe caractéristique du ressort (1) :
- le couple de rotation M à limiter = F_{Courbe caractéristique de ressort} x Rayon ;
- l'angle de rotation φ autour de l'axe de rotation confère à la commande d'entraînement l'élasticité nécessaire ;
**caractérisé en ce qu'**entre la partie primaire (2) et la partie secondaire (3) du dispositif de protection contre les surcharges est réalisé un passage annulaire concentrique à l'axe de rotation et **en ce que** le ressort (1) s'étend à l'intérieur du passage annulaire entre une pièce en saillie de la partie primaire (2) et une pièce en saillie de la partie secondaire (3) sur presque toute la périphérie du passage annulaire.

2. Unité d'entraînement
2.1 avec au moins une machine d'entraînement ;
2.2 avec au moins un démultiplicateur;
2.3 avec au moins un dispositif de protection contre les surcharges, comprenant une partie primaire ainsi qu'une partie secondaire (2, 3), lesquelles sont couplées l'une à l'autre au moyen d'un ressort (1) et, en cas de blocage au-dessus d'un couple limite, sont aptes à tourner l'une par rapport à l'autre d'un angle de rotation φ autour d'un axe de rotation ;
2.4 la machine d'entraînement est couplée au côté réducteur à vitesse rapide ;
2.5 le dispositif de protection contre les surcharges peut être couplé au moins indirectement à un arbre d'entraînement de la machine de travail.
**caractérisé en ce qu'**entre la partie primaire (2) et la partie secondaire (3) du dispositif de protection contre les surcharges est réalisé un passage annulaire concentrique à l'axe de rotation et **en ce que** le ressort (I) s'étend à l'intérieur du passage annulaire entre une pièce en saillie de la partie primaire (2) et une pièce en saillie de la partie secondaire (3) sur presque toute la périphérie du passage annulaire.
